# EUROPÄISCHE PATENTSCHRIFT

(11) **EP 1 450 526 B1**
(45) Veröffentlichungstag und Bekanntmachung des Hinweises auf die Patenterteilung: **04.06.2008**
(21) Anmeldenummer: 03405119.3
(22) Anmeldetag: 24.02.2003
(51) Int. Cl.: H04L 12/58

(54) **Transfer von Multimediameldungen zwischen MMS-Multimediadienstzentralen**
Transfer of multimedia messages between MMS multimedia message center
Transfer des messages multimédia entre centres de messagerie multimédia SMM

(43) Veröffentlichungstag der Anmeldung: 25.08.2004
(73) Patentinhaber: Swisscom Mobile AG, 3050 Bern (CH)
(72) Erfinder: Jost, Herbert, 3007 Bern (CH)
(74) Vertreter: Rentsch & Partner

(56) Entgegenhaltungen:
- WO-A-02/060190
- US-A1- 2003 009 698
- "Stop spam, virus and unwanted email beforethey get to your computer" INTERNET, [Online] Juni 2002 (2002-06), XP002250466 Gefunden im Internet: <URL:www.mailbroadcast.com/bm1/stopspam.ht m> [gefunden am 2003-08-06]
- ANONYMOUS: "3rd Generation Partnership Project;Technical Specification Group Services and System Aspects; Service Aspects; Stage 1; Multimedia Messaging Service (Release 2000); 3G TS 22.140 V4.0.1" XP002216526 Gefunden im Internet: <URL: ftp://ftp.3gpp.org/specs/2000-09/Rel-4/22_ series/22140-401.zip> [gefunden am 2002-10-11] * Seite 5 *

## Beschreibung

### Technisches Gebiet

Die vorliegende Erfindung betrifft ein Verfahren und Vorrichtungen für den Transfer von Multimediameldungen. Die Erfindung betrifft insbesondere ein Verfahren, einen computerbasierten Meldungstransferagenten und ein Computerprogrammprodukt für den Transfer von Multimediameldungen zwischen Multimediadienstzentralen von Mobilfunknetzen, wobei die Multimediameldungen zwischen einer ersten Multimediadienstzentrale und dem computerbasierten Meldungstransferagenten gemäss einem Multimediameldungsprotokoll ausgetauscht werden und wobei die Multimediameldungen zwischen dem computerbasierten Meldungstransferagenten und einer zweiten Multimediadienstzentrale in elektronischen Nachrichten gemäss einem Nachrichtentransferprotokoll ausgetauscht werden.

### Stand der Technik

Neben der Verwendung von Mobilfunktelefonen für die Sprachkommunikation zwischen mobilen Teilnehmern in Mobilfunknetzen, hat sich insbesondere in GSM-Mobilfunknetzen (Global System für Mobile Communication) die Verwendung für den Austausch von Kurzmeldungen, so genannte SMS-Meldungen (Short Message Service), als ausserordentlich populär erwiesen. Mittels der SMS-Meldungen können mobile Teilnehmer Meldungen mit jeweils maximal 160 Zeichen untereinander austauschen. Die SMS-Meldungen eignen sich somit nicht für den Austausch von Multimediadatenobjekten, die insbesondere Audio und/oder Videodaten enthalten. Für den Austausch von Meldungen mit Multimediadatenobjekten wurden innerhalb eines Third Generation Partnership Projects (3GPP) technische Spezifikationen für spezielle Multimediameldungen definiert, so genannte MMS-Meldungen (Multimedia Messaging Service). Die entsprechenden technischen Spezifikationen 3GPP TS 23.140 V.5.0.0 vom September 2001, sind bei 3GPP Support Office, 650 Route des Lucioles, Sophia Antipolis, Valbonne, Frankreich, erhältlich. Im Unterschied zum Austausch von SMS-Meldungen, werden mobile Teilnehmer beim Austausch von MMS-Meldungen immer durch die MMS-Systeme, die so genannten MMSE (Multimedia Messaging Service Environment), ihres Heimnetzbetreibers bedient. Das heisst, die abgehenden Multimediameldungen eines Teilnehmers werden immer über die Multimediadienstzentrale seines Netzbetreibers weitergeleitet und die Multimediameldungen an einen Teilnehmer werden immer über die Multimediadienstzentrale seines Netzbetreibers an den Teilnehmer geleitet. Dies bedingt, dass die Multimediameldungssysteme der verschiedenen Netzbetreiber miteinander verbindbar sind und für den Austausch von Multimediameldungen untereinander eingerichtet sein müssen. Die Multimediadienstzentralen, so genannte Multimedia Messaging Service Centres (MMSC) oder MMS Relay Servers für den Austausch von MMS-Meldungen, tauschen Multimediameldungen gemäss einem Multimediameldungsprotokoll aus. Das Multimediameldungsprotokoll, das so genannte MM4-Protokoll für den Transfer von MMS-Meldungen zwischen verschiedenen MMSC oder MMS Relay Servers, definiert die Dienstprimitive und die entsprechenden Informationselemente für den Austausch von Multimediameldungen zwischen den Multimediadienstzentralen. Der Austausch der Informationselemente für den Transfer einer Multimediameldung zwischen den Multimediadienstzentralen erfolgt in elektronischen Nachrichten gemäss einem Nachrichtentransferprotokoll. Die Informationselemente, einschliesslich der Multimediameldungen, werden insbesondere in E-Mail-Nachrichten gemäss SMTP (Simple Mail Transfer Protocol) zwischen den MMSC oder MMS Relay Servers ausgetauscht.

Es ist zu befürchten, dass, wie bereits bei den E-Mail-Nachrichten, so genannte Spammer riesige Mengen unaufgeforderter Multimediameldungen aussenden und damit die Mobilfunknetze und insbesondere auch die Multimediadienstzentralen und die Kommunikationsverbindungen zwischen den Multimediadienstzentralen unnötig belasten.

Die Patentanmeldung WO 02/060190 beschreibt einen computerbasierten Gateway für den Austausch von Kurzmeldungen wie Sprach-Meldungen oder E-Mail zwischen drahtlosen Geräten, z.B. Mobilfunktelefone, und fest verdrahteten Endgeräten, z. B. Computer und Teledienst-Server. Meldungen von festen Endgeräten werden jeweils über eine von mehreren Meldungszentralen an ein mobiles Gerät übermittelt. Abhängig von der betreffenden Meldungszentrale, werden zwischen einem festen Endgerät und der Meldungszentrale unterschiedliche Protokolle verwendet. Abhängig vom betreffenden festen Endgerät, sind auch verschiedene Protokollschnittstellen für die Übermittlung von Meldungen von einem mobilen Gerät an ein festes Endgerät vorgesehen. Der Gateway leitet Meldungen von einer Meldungszentrale an ein festes Endgerät oder von einem festen Endgerät an eine Meldungszentrale, und dient als einzige Schnittstelle für Punkt-zu-Punkt-Protokoll Meldungen, die zu einer Meldungszentrale abgehen oder von einer Meldungszentrale ankommen. Somit können die festen Endgeräte für alle Meldungen eine einzige Schnittstelle benützen und sind weder von der Meldungszentrale noch vom drahtlosen Netzwerk abhängig. Der Gateway nach WO 02/060190 umfasst auch eine Spamkontrolle, um Meldungen von einem spezifischen Sender, welche eine definierte Anzahl überschreiten, zu identifizieren und Meldungen vom betreffenden Sender zu sperren.

### Darstellung der Erfindung

Es ist eine Aufgabe der vorliegenden Erfindung, ein Verfahren, einen computerbasierten Meldungstransferagenten und ein Computerprogrammprodukt für den Transfer von Multimediameldungen zwischen Multimediadienstzentralen vorzuschlagen, welche nicht die Nachteile des Stands der Technik aufweisen und welche insbesondere ermöglichen, die Mobilfunknetze, die Multimediadienstzentralen und die Kommunikationsverbindungen zwischen den Multimediadienstzentralen vom Austausch unerwünschter und/oder unnötiger Multimediameldungen zu entlasten.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor. Der Transfer der Multimediameldungen über den computerbasierten Meldungstransferagenten ermöglicht die Steuerung des Transfers der Multimediameldungen an der Schnittstelle zwischen den Protokollschichten des Multimediameldungsprotokolls und den Protokollschichten des Nachrichtentransferprotokolls. Ausser dem Einschlaufen des computerbasierten Meldungstransferagenten in den Datentransfer zwischen den Multimediadienstzentralen brauchen dafür im System keine weiteren Änderungen vorgenommen zu werden, insbesondere können im computerbasierten Meldungstransferagenten Multimediameldungen basierend auf ihren Adressinformationen, die Ursprungs- und/oder die Destinationsadresse, gefiltert und gesperrt werden. Dadurch, dass jeweils bei der Sperrung einer Multimediameldung vom computerbasierten Meldungstransferagenten eine negative Multimediameldungsantwort gemäss dem Multimediameldungsprotokoll generiert und an die Multimediadienstzentrale übermittelt wird, von der die gesperrte Multimediameldung als Informationselement einer Multimediameldungsanfrage erhalten wurde, kann der Wartezustand, in den die Multimediadienstzentrale durch Ausgabe der Multimediameldungsanfrage mit der gesperrten Multimediameldung gesetzt wurde, zurückgesetzt werden. Damit wird verhindert, dass die Multimediadienstzentrale die Multimediameldungsanfrage mit der gesperrten Multimediameldung erneut zur Übermittlung ausgibt, so dass sowohl die Computerressourcen der Multimediadienstzentrale und des computerbasierten Meldungstransferagenten als auch die Kommunikationsverbindung zwischen der Multimediadienstzentrale und dem computerbasierten Meldungstransferagenten nicht unnötig beansprucht werden.

Durch die Generierung von Fehlernachrichten für eine gesperrte Multimediameldung, die im computerbasierten Meldungstransferagenten von der zweiten Multimediadienstzentrale in einer elektronischen Nachricht empfangen wurde, und durch die Übermittlung der Fehlernachricht an die zweite Multimediadienstzentrale wird ermöglicht, dass die Sperrung der zweiten Multimediadienstzentrale angezeigt werden kann. Wird im computerbasierten Meldungstransferagenten eine solche Fehlernachricht empfangen (beispielsweise von einem entsprechenden zweiten computerbasierten Meldungstransferagenten bei der zweiten Multimediadienstzentrale), kann dies vom computerbasierten Meldungstransferagenten der ersten Multimediadienstzentrale mittels einer entsprechenden negativen Multimediameldungsantwort angezeigt werden. Dadurch kann wiederum der Wartezustand, in den die erste Multimediadienstzentrale durch Ausgabe der Multimediameldungsanfrage mit der gesperrten Multimediameldung gesetzt wurde, zurückgesetzt werden. Damit wird verhindert, dass die erste Multimediadienstzentrale die Multimediameldungsanfrage mit der gesperrten Multimediameldung erneut zur Übermittlung an die zweite Multimediadienstzentrale ausgibt, so dass neben den Computerressourcen der ersten Multimediadienstzentrale und des computerbasierten Meldungstransferagenten insbesondere auch die Kommunikationsverbindung zwischen dem computerbasierten Meldungstransferagenten und der zweiten Multimediadienstzentrale nicht unnötig beansprucht wird, wodurch die Kosten, die für die Übermittlung unnötiger Daten über die letztgenannte Kommunikationsverbindung anfallen würden, verhindert werden können.

In einer Ausführungsvariante werden die Multimediameldungen als MMS-Meldungen ausgetauscht, wird das MM4-Protokoll als Multimediameldungsprotokoll verwendet, werden Multimediameldungsanfragen verwendet, die einer MM4_forward.REQ-Anfrage entsprechen, werden E-Mail-Nachrichten als elektronische Nachrichten verwendet, wird das SMTP-Protokoll als Nachrichtentransferprotokoll verwendet, und werden Multimediameldungsantworten verwendet, die einer MM4_forward.RES-Antwort entsprechen.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch Multimediadienstzentralen von mehreren Netzbetreibern darstellt, von denen eine über einen Meldungstransferagenten mit den anderen Multimediadienstzentralen verbunden ist.
Figur 2 zeigt ein Blockdiagramm, welches schematisch eine Multimediadienstzentrale eines Netzbetreibers darstellt, die über einen in der Multimediadienstzentrale integrierten Meldungstransferagenten mit Multimediadienstzentralen von anderen Netzbetreibern verbunden ist.
Figur 3 zeigt ein Blockdiagramm, welches schematisch zwei Multimediadienstzentralen von verschiedenen Netzbetreibern darstellt, die jeweils mit einem separaten Meldungstransferagenten verbunden sind und über diese Meldungstransferagenten miteinander verbunden sind.
Figur 4 zeigt ein kombiniertes Zeit- und Flussdiagramm, das schematisch den Transfer von Multimediameldungen zwischen zwei Multimediadienstzentralen darstellt, die jeweils mit einem Meldungstransferagenten verbunden sind und über diese Meldungstransferagenten miteinander verbunden sind.

### Wege zur Ausführung der Erfindung

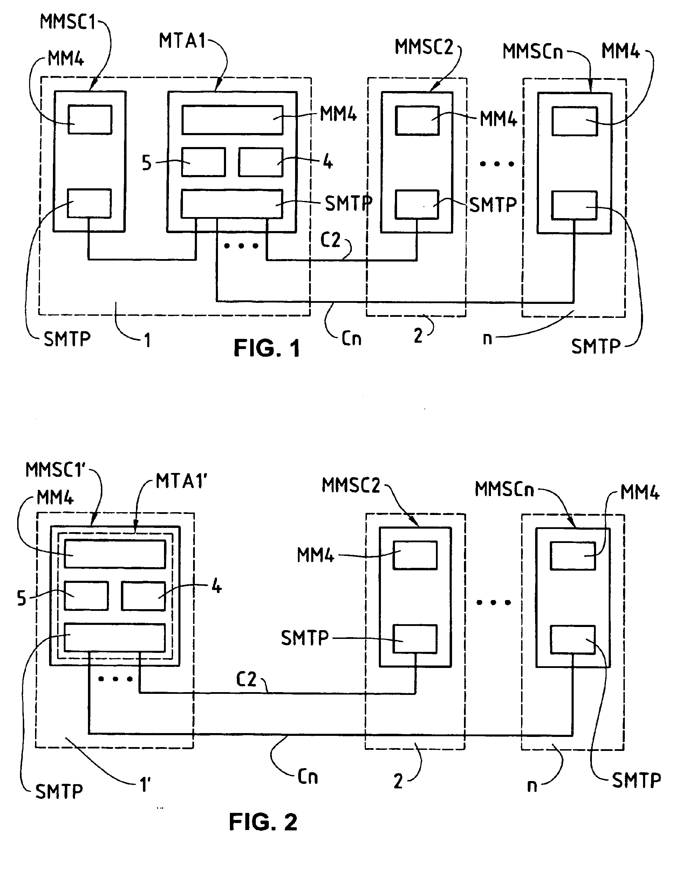

In den Figuren 1, 2, 3 und 4 werden einander entsprechende, gleiche Komponenten durch gleiche Bezugszeichen bezeichnet, ausser wenn eine unterschiedliche Bezeichnung dem besseren Verständnis der nachfolgenden Beschreibung dienlich ist.

In den Figuren 1, 2 und 3 bezeichnen die Bezugszeichen 1, 1', 2, 3 und n jeweils Multimediasysteme, insbesondere MMS-Systeme (Multimedia Messaging Service), so genannte MMSE (Multimedia Messaging Service Environment), die von verschiedenen Netzbetreibern betrieben werden.

In den Figuren 1, 2, 3 und 4 bezeichnen die Bezugszeichen MMSC1, MMSC1', MMSC2, MMSC3, MMSCn computerbasierte Multimediadienstzentralen, insbesondere so genannte Multimedia Messaging Service Centres (MMSC) oder MMS Relay Servers für den Transfer von MMS-Meldungen zwischen Multimediasystemen. Die Multimediadienstzentralen MMSC1, MMSC1', MMSC2, MMSC3, MMSCn sind jeweils mit nicht dargestellten Mobilfunknetzen verbunden, insbesondere mit GSM- oder UMTS-Netzen, um MMS-Meldungen mit mobilen Endgeräten in diesen Mobilfunknetzen auszutauschen. MMS-Meldungen können von Kommunikationsendgeräten beispielsweise auch über feste Kommunikationsverbindungen, z.B. über das Internet, an die Multimediadienstzentralen MMSC1, MMSC1', MMSC2, MMSC3, MMSCn zur Übermittlung an mobile Endgeräte übertragen werden.

Die Multimediadienstzentralen MMSC1, MMSC1', MMSC2, MMSC3, MMSCn umfassen jeweils ein Multimediakommunikationsmodul MM4, um Multimediameldungen gemäss einem Multimediameldungsprotokoll mit anderen Multimediadienstzentralen MMSC1, MMSC1', MMSC2, MMSC3, MMSCn auszutauschen. Als Multimediameldungsprotokoll wird insbesondere das so genannte MM4-Protokoll verwendet, welches die Dienstprimitive und die entsprechenden Informationselemente für den Transfer von MMS-Meldungen zwischen MMSC oder MMS Relay Servers definiert. Die Multimediakommunikationsmodule MM4 sind vorzugsweise als programmierte Softwaremodule ausgeführt.

Die Multimediadienstzentralen MMSC1, MMSC1', MMSC2, MMSC3, MMSCn umfassen jeweils ein Nachrichtenkommunikationsmodul SMTP, um die Informationselemente für die Übermittlung von Multimediameldungen in elektronischen Nachrichten gemäss einem Nachrichtentransferprotokoll zwischen den Multimediadienstzentralen MMSC1, MMSC1', MMSC2, MMSC3, MMSCn auszutauschen. Die Informationselemente für die Übermittlung von Multimediameldungen werden insbesondere in E-Mail-Nachrichten gemäss dem so genannten SMTP-Protokoll (Simple Mail Transfer Protocol) oder ESMTP-Protokoll (Extended Simple Mail Transfer Protocol) zwischen den Multimediadienstzentralen MMSC1, MMSC1', MMSC2, MMSC3, MMSCn ausgetauscht. Die Nachrichtenkommunikationsmodule SMTP sind vorzugsweise als programmierte Softwaremodule ausgeführt.

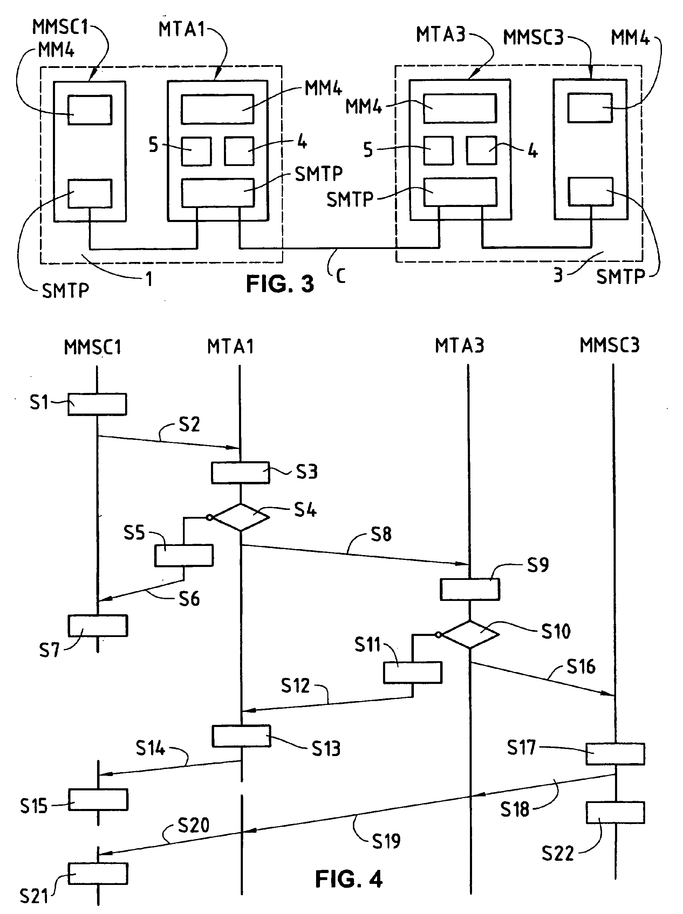

In den Figuren 1, 2, 3 und 4 bezeichnen die Bezugszeichen MTA1, MTA1' und MTA3 computerbasierte Meldungstransferagenten, so genannte Message Transfer Agents (MTA), die jeweils einer Multimediadienstzentrale MMSC1, MMSC1' respektive MMSC3 zugeordnet sind. Wie in den Figuren 1 und 3 dargestellt ist, sind die Meldungstransferagenten MTA1 und MTA3 jeweils auf einem von der zugeordneten Multimediadienstzentrale MMSC1 respektive MMSC3 separaten Computer ausgeführt, der über eine Kommunikationsverbindung mit der betreffenden Multimediadienstzentrale MMSC1 respektive MMSC3 verbunden ist. Der Meldungstransferagent MTA1' ist hingegen, wie in der Figur 2 dargestellt, als programmiertes Softwaremodul mit der Multimediadienstzentrale MMSC1' auf einem gemeinsamen Computer ausgeführt.

Die Meldungstransferagenten MTA1, MTA1', MTA3 umfassen jeweils ein Multimediakommunikationsmodul MM4, um Multimediameldungen, wie oben beschrieben, gemäss dem Multimediameldungsprotokoll mit den Multimediadienstzentralen MMSC1, MMSC1', MMSC2, MMSC3, MMSCn auszutauschen.

Die Meldungstransferagenten MTA1, MTA1', MTA3 umfassen zudem jeweils ein Nachrichtenkommunikationsmodul SMTP, um die Informationselemente für die Übermittlung von Multimediameldungen, wie oben beschrieben, in elektronischen Nachrichten gemäss dem Nachrichtentransferprotokoll mit den Multimediadienstzentralen MMSC1, MMSC1', MMSC2, MMSC3, MMSCn auszutauschen.

Wie in den Figuren 1 und 2 schematisch dargestellt ist, werden die Multimediameldungen durch die Meldungstransferagenten MTA1, MTA1' über eine ausgewählte Kommunikationsverbindung C2, ..., Cn gezielt an diejenige Multimediadienstzentrale MMSC2, ..., MMSCn weitergeleitet, die für den Adressbereich zuständig ist, der durch Adressinformationen (Destinationsadresse) der Multimediameldung bestimmt ist. Zu diesem Zweck umfassen die Meldungstransferagenten MTA1, MTA1', MTA3 beispielsweise nicht dargestellte Routingmodule und Tabellen mit Routinginformationen. Die Kommunikationsverbindungen C, C2, ..., Cn sind typischerweise gemietete Leitungen oder IP-Netzwerke (Internet Protocol), die entsprechend dem übermittelten Datenvolumen verrechnet werden.

Die Meldungstransferagenten MTA1, MTA1', MTA3 umfassen überdies jeweils ein Sperrmodul 4 zum Sperren von empfangenen Multimediameldungen basierend auf Adressinformationen, die den Multimediameldungen jeweils zugeordnet sind. Das Sperrmodul 4 filtert sowohl MMS-Adressen als auch SMTP-Adressen, die einer Multimediameldung zugehören, indem es diese Adressen mit Einträgen in Sperrlisten und/oder Berechtigungslisten vergleicht, die im Meldungstransferagenten MTA1, MTA1', MTA3 gespeichert sind. Ist eine Adresse in einer Sperrliste eingetragen, wird die betreffende Multimediameldung gesperrt, das heisst nicht weitergeleitet. Ist eine Adresse in einer Berechtigungsliste eingetragen, wird die betreffende Multimediameldung weitergeleitet. Es ist so möglich, Multimediameldungen auf Grund ihrer Ursprungs- und/oder Destinationsadressen zu sperren, so dass beispielsweise sämtliche Multimediameldungen von einem bekannten Spammer gesperrt werden können, dass sämtliche Multimediameldungen an das Multimediasystem 1, 1', 2, 3, n eines bestimmten Netzbetreibers gesperrt werden können, dass nur die Multimediameldungen an das Multimediasystem 1, 1', 2, 3, n eines bestimmten Netzbetreibers weitergeleitet werden oder dass nur die Multimediameldungen von definierten Absendern weitergeleitet werden. Es ist auch möglich Kombinationen von Ursprungs- und Destinationsadressen zu sperren, so dass sämtliche Multimediameldungen von einem bekannten Absender an einen bestimmten Empfänger gesperrt werden können. Das Sperrmodul 4 ist vorzugsweise als programmiertes Softwaremodul ausgeführt.

Schliesslich umfassen die Meldungstransferagenten MTA1, MTA1', MTA3 jeweils ein Antwortmodul 5 zum Generieren von Protokollmeldungen in Fällen von gesperrten Multimediameldungen und zum Übermitteln der generierten Protokollmeldungen jeweils an diejenige Multimediadienstzentrale MMSC1, MMSC1', MMSC2, MMSC3, MMSCn von der die gesperrte Multimediameldung vorgängig empfangen wurde. Das Antwortmodul 5 ist vorzugsweise als programmiertes Softwaremodul ausgeführt.

Wurde die gesperrte Multimediameldung als Informationselement in einer Multimediameldungsanfrage von der lokalen Multimediadienstzentrale MMSC1, MMSC1', MMSC2, MMSC3, MMSCn empfangen, das heisst von der Multimediadienstzentrale, die dem selben, vom gleichen Netzbetreiber betriebenen Multimediasystem 1, 1', 2, 3, n angehört, wie der betreffende Meldungstransferagent MTA1, MTA1', MTA3, von dem die Multimediameldung gesperrt wurde, so generiert das Antwortmodul 5 dieses Meldungstransferagenten eine negative Multimediameldungsantwort gemäss dem Multimediameldungsprotokoll und übermittelt diese negative Multimediameldungsantwort an die lokale Multimediadienstzentrale, gegebenenfalls mittels des betreffenden Nachrichtenkommunikationsmoduls SMTP. Bei der Multimediameldungsanfrage handelt es sich um eine MM4_forward.REQ-Anfrage. Bei der negativen Multimediameldungsantwort handelt es sich um eine MM4_forward.RES-Antwort mit dem Status einer nicht akzeptierten Multimediameldung.

Wurde die gesperrte Multimediameldung als Informationselement in einer Multimediameldungsanfrage von einer entfernten Multimediadienstzentrale MMSC1, MMSC1', MMSC2, MMSC3, MMSCn empfangen, das heisst von einer Multimediadienstzentrale, die nicht dem selben Multimediasystem 1, 1', 2, 3, n angehört, wie der betreffende Meldungstransferagent MTA1, MTA1', MTA3, von dem die Multimediameldung gesperrt wurde, so generiert das Antwortmodul 5 dieses Meldungstransferagenten eine Fehlernachricht gemäss dem Nachrichtentransferprotokoll und übermittelt diese Fehlernachricht mittels des betreffenden Nachrichtenkommunikationsmoduls SMTP an die entfernte Multimediadienstzentrale. Bei der Fehlernachricht handelt es sich um eine SMTP-Reply-Meldung mit einem Fehlercode, z.B. 550, "Rejected by Operator's SMTP Policy". An dieser Stelle soll festgehalten werden, dass das Antwortmodul 5 die Fehlernachricht bereits beim Sessionsaufbau für den Nachrichtentransfer, der durch die entfernte Multimediadienstzentrale MMSC1, MMSC1', MMSC2, MMSC3, MMSCn für die Übermittlung der Multimediameldung in der Multimediameldungsanfrage eingeleitet wird, generieren und an die betreffende entfernte Multimediadienstzentrale übermitteln kann, wenn anlässlich des Sessionsaufbaus Adressinformation empfangen werden, die der Multimediameldung zugeordnet sind und auf Grund derer die Multimediameldung durch das Sperrmodul 4 gesperrt werden muss. Das heisst die Multimediameldung kann im Meldungstransferagent MTA1, MTA1', MTA3 während des Sessionsaufbaus für die Übermittlung der Multimediameldung gesperrt werden, bevor die eigentliche Multimediameldung im Meldungstransferagenten MTA1, MTA1', MTA3 von der entfernten Multimediadienstzentrale MMSC1, MMSC1', MMSC2, MMSC3, MMSCn empfangen worden ist.

Wenn der Meldungstransferagent MTA1, MTA1', MTA3 eine oben beschriebene Fehlernachricht von einem entfernten Multimediasystem 1, 1', 2, 3, n empfängt, das heisst, wenn eine von der lokalen Multimediadienstzentrale MMSC1, MMSC1', MMSC2, MMSC3, MMSCn an die entfernte Multimediadienstzentrale MMSC1, MMSC1', MMSC2, MMSC3, MMSCn übermittelte Multimediameldung durch das entfernte Multimediasystem 1, 1', 2, 3, n gesperrt wurde, dann generiert das Antwortmodul 5 im Meldungstransferagenten MTA1, MTA1', MTA3 des lokalen Multimediasystems 1, 1', 2, 3, n eine negative Multimediameldungsantwort gemäss dem Multimediameldungsprotokoll und übermittelt diese negative Multimediameldungsantwort als Antwort auf die entsprechende Multimediameldungsanfrage an die lokale Multimediadienstzentrale MMSC1, MMSC1', MMSC3, gegebenenfalls mittels des betreffenden Nachrichtenkommunikationsmoduls SMTP.

In den folgenden Abschnitten wird mit Bezug auf die Figuren 3 und 4 der Verfahrensablauf am Beispiel der Übermittlung einer Multimediameldung von der Multimediadienstzentrale MMSC1 an die Multimediadienstzentrale MMSC3 beschrieben.

In der Figur 3 sind zwei Multimediasysteme 1, 3 dargestellt, die jeweils eine Multimediadienstzentrale MMSC1, MMSC3 und einen separaten mit der betreffenden Multimediadienstzentrale MMSC1, MMSC3 verbunden Meldungstransferagenten MTA1, MTA3 umfassen. Die beiden Multimediasysteme 1, 3 sind durch eine Kommunikationsverbindung C zwischen den Meldungstransferagenten MTA1, MTA3 miteinander verbunden.

Im Schritt S1 empfängt die Multimediadienstzentrale MMSC1 eine Multimediameldung beispielsweise von einem so genannten MMS User Agenten eines nicht dargestellten Kommunikationsendgeräts in einer Multimediaübermittlungsanfrage, insbesondere in einer Multimediaübermittlungsanfrage entsprechend einer MM1_submit.REQ-Anfrage, oder von einem Server in einer Multimediaübermittlungsanfrage gemäss dem MM3-Protokoll oder dem MM7-Protokoll, die in den eingangs erwähnten technischen Spezifikationen für MMS-Meldungen definiert wurden.

Im Schritt S2 leitet das Multimediakommunikationsmodul MM4 der Multimediadienstzentrale MMSC1 die im Schritt S1 empfangene Multimediameldung mittels einer Multimediameldungsanfrage gemäss dem Multimediameldungsprotokoll an den Meldungstransferagenten MTA1. Dabei werden die Informationselemente für die Übermittlung der Multimediameldung durch das Nachrichtenkommunikationsmodul SMTP der Multimediadienstzentrale MMSC1 in elektronischen Nachrichten gemäss dem Nachrichtentransferprotokoll an das Nachrichtenkommunikationsmodul SMTP des Meldungstransferagenten MTA1 übermittelt. Insbesondere werden im Schritt S2 die Informationselemente entsprechend einer MM4_forward.REQ-Anfrage in E-Mail-Nachrichten gemäss dem SMTP-Protokoll an den Meldungstransferagenten MTA1 übermittelt.

Im Schritt S3 werden die Adressinformationen der Multimediameldung, die im Schritt S2 mit den Informationselementen an den Meldungstransferagenten MTA1 übermittelt wurden, durch das Sperrmodul 4 des Meldungstransferagenten MTA1 gefiltert.

Im Schritt S4 untersucht das Sperrmodul 4 des Meldungstransferagenten MTA1, ob im Schritt S3 Adressen gefunden wurden, die mit Einträgen in Sperrlisten oder Berechtigungslisten übereinstimmen und ob die im Schritt S2 an den Meldungstransferagenten MTA1 geleitete Multimediameldung weitergeleitet werden kann (JA) oder gesperrt werden muss (NEIN).

Falls im Schritt S4 entschieden wurde, dass die Multimediameldung gesperrt werden muss, generiert das Antwortmodul 5 des Meldungstransferagenten MTA1 im Schritt S5 eine negative Multimediameldungsantwort gemäss dem Multimediameldungsprotokoll als Antwort auf die im Schritt S2 übermittelte Multimediameldungsanfrage. Insbesondere wird im Schritt S5 eine Multimediameldungsantwort entsprechend einer MM4_forward.RES-Antwort mit dem Status einer nicht akzeptierten Multimediameldung generiert.

Im Schritt S6 übermittelt das Antwortmodul 5 des Meldungstransferagenten MTA1 die im Schritt S5 generierte negative Multimediameldungsantwort an die Multimediadienstzentrale MMSC1. Die Übermittlung erfolgt wie oben bereits beschrieben unter Zuhilfenahme der Nachrichtenkommunikationsmodule SMTP.

Im Schritt S7 generiert die Multimediadienstzentrale MMSC1 auf Grund der im Schritt S6 übermittelten negativen Multimediameldungsantwort eine Multimediaübermittlungsantwort, beispielsweise eine Multimediaübermittlungsantwort entsprechend einer MM1_submit.RES-Anfrage respektive eine Multimediaübermittlungsantwort gemäss dem MM3-Protokoll oder dem MM7-Protokoll, und übermittelt die generierte Multimediaübermittlungsantwort an den MMS User Agenten respektive Server, von dem im Schritt S1 die Multimediaübermittlungsanfrage mit der Multimediameldung empfangen wurde.

Falls im Schritt S4 entschieden wurde, dass die Multimediameldung weitergeleitet werden kann, leitet der Meldungstransferagent MTA1 die im Schritt S2 empfangene Multimediameldung im Schritt S8 mittels einer Multimediameldungsanfrage gemäss dem Multimediameldungsprotokoll an den Meldungstransferagenten MTA3. Dabei werden die Informationselemente für die Übermittlung der Multimediameldung durch das Nachrichtenkommunikationsmodul SMTP des Meldungstransferagenten MTA1 in elektronischen Nachrichten gemäss dem Nachrichtentransferprotokoll über die Kommunikationsverbindung C an das Nachrichtenkommunikationsmodul SMTP des Meldungstransferagenten MTA3 übermittelt. Insbesondere werden die Informationselemente entsprechend einer MM4_forward.REQ-Anfrage in E-Mail-Nachrichten gemäss dem SMTP-Protokoll an den Meldungstransferagenten MTA3 übermittelt.

Im Schritt S9 werden die Adressinformationen der Multimediameldung, die im Schritt S8 mit den Informationselementen an den Meldungstransferagenten MTA3 übermittelt wurden, durch das Sperrmodul 4 des Meldungstransferagenten MTA3 gefiltert.

Im Schritt S10 wird durch das Sperrmodul 4 des Meldungstransferagenten MTA3 untersucht, ob im Schritt S9 Adressen gefunden wurden, die mit Einträgen in Sperrlisten oder Berechtigungslisten übereinstimmen und ob die im Schritt S8 an den Meldungstransferagenten MTA3 geleitete Multimediameldung an die Multimediadienstzentrale MMSC3 weitergeleitet werden kann (JA) oder gesperrt werden muss (NEIN).

Falls im Schritt S10 entschieden wurde, dass die Multimediameldung gesperrt werden muss, generiert das Antwortmodul 5 des Meldungstransferagenten MTA3 im Schritt S11 eine Fehlernachricht gemäss dem Nachrichtentransferprotokoll als Antwort auf die im Schritt S8 übermittelte elektronische Nachricht. Insbesondere wird im Schritt S11 eine SMTP-Reply-Meldung mit einem Fehlercode generiert, z.B. 550, "Rejected by Operator's SMTP Policy".

Im Schritt S12 übermittelt das Antwortmodul 5 des Meldungstransferagenten MTA3 die im Schritt S11 generierte Fehlernachricht über die Kommunikationsverbindung C an den Meldungstransferagenten MTA1. Die Übermittlung erfolgt wie oben bereits beschrieben unter Zuhilfenahme der Nachrichtenkommunikationsmodule SMTP.

Im Schritt S13 generiert das Antwortmodul 5 des Meldungstransferagenten MTA1 auf Grund der im Schritt S12 übermittelten Fehlernachricht eine negative Multimediameldungsantwort gemäss dem Multimediameldungsprotokoll als Antwort auf die im Schritt S2 übermittelte Multimediameldungsanfrage. Insbesondere wird im Schritt S13 eine Multimediameldungsantwort entsprechend einer MM4_forward.RES-Antwort mit dem Status einer nicht akzeptierten Multimediameldung generiert.

Im Schritt S14 übermittelt das Antwortmodul 5 des Meldungstransferagenten MTA1 die im Schritt S13 generierte negative Multimediameldungsantwort an die Multimediadienstzentrale MMSC1. Die Übermittlung erfolgt wie oben bereits beschrieben, unter Zuhilfenahme der Nachrichtenkommunikationsmodule SMTP.

Im Schritt S15 generiert die Multimediadienstzentrale MMSC1 auf Grund der im Schritt S14 übermittelten negativen Multimediameldungsantwort eine Multimediaübermittlungsantwort, insbesondere eine Multimediaübermittlungsantwort entsprechend einer MM1_submit.RES-Anfrage, und übermittelt die generierte Multimediaübermittlungsantwort an den MMS User Agenten, von dem im Schritt S1 die Multimediaübermittlungsanfrage mit der Multimediameldung empfangen wurde.

Falls im Schritt S10 entschieden wurde, dass die Multimediameldung weitergeleitet werden kann, leitet der Meldungstransferagent MTA3 die im Schritt S8 empfangene Multimediameldung im Schritt S16 mittels einer Multimediameldungsanfrage gemäss dem Multimediameldungsprotokoll an die Multimediadienstzentrale MMSC3. Die Übermittlung erfolgt wie oben bereits beschrieben unter Zuhilfenahme der Nachrichtenkommunikationsmodule SMTP.

Im Schritt S17 entnimmt das Multimediakommunikationsmodul MM4 die Multimediameldung aus der im Schritt S16 empfangenen Multimediameldungsanfrage und generiert eine positive Multimediameldungsantwort gemäss dem Multimediameldungsprotokoll. Insbesondere wird im Schritt S17 eine Multimediameldungsantwort entsprechend einer MM4_forward.RES-Antwort mit einem positiven Status generiert.

In den Schritten S18, S19 und S20 übermittelt die Multimediadienstzentrale MMSC3 die im Schritt S17 generierte Multimediameldungsantwort über den Meldungstransferagenten MTA3, die Kommunikationsverbindung C und den Meldungstransferagenten MTA1 an die Multimediadienstzentrale MMSC1.

Im Schritt S21 generiert die Multimediadienstzentrale MMSC1 auf Grund der in den Schritten S18, S19 und S20 übermittelten positiven Multimediameldungsantwort eine Multimediaübermittlungsantwort, insbesondere eine Multimediaübermittlungsantwort entsprechend einer MM1_submit.RES-Anfrage, und übermittelt die generierte Multimediaübermittlungsantwort an den MMS User Agenten, von dem im Schritt S1 die Multimediaübermittlungsanfrage mit der Multimediameldung empfangen wurde.

Im Schritt S22 generiert die Multimediadienstzentrale MMSC3 eine Multimedianotifikationsanfrage, insbesondere eine Multimedianotifikationsanfrage entsprechend einer MM1_notification.REQ-Anfrage, und übermittelt die generierte Multimedianotifikationsanfrage an den MMS User Agenten eines nicht dargestellten Kommunikationsendgeräts, an das die im Schritt S1 empfangene Multimediameldung adressiert war und leitet damit die Übermittlung der Multimediameldung an das nicht dargestellte Kommunikationsendgerät ein.

Der Fachmann wird verstehen, dass funktionale Module, die als programmierte Softwaremodule ausgeführt werden, auch vollständig oder teilweise hardwaremässig ausgeführt werden können. Der Fachmann wird auch verstehen, dass der computerbasierte Meldungstransferagent MTA1, MTA1', MTA3 gemäss verschiedenen Softwarearchitekturen ausgeführt werden kann, ohne vom Sinn der vorliegenden Erfindung abzuweichen. Zum Beispiel kann die Funktionalität zum Generieren von Multimediameldungen gemäss dem Multimediameldungsprotokoll direkt in das Antwortmodul 5 integriert werden oder das Antwortmodul 5 kann für diese Funktionalität auf ein separates Multimediakommunikationsmodul MM4 zugreifen.

## Patentansprüche

1. Verfahren für den Transfer von MMS-Multimediameldungen zwischen MMS-Multimediadienstzentralen (MMSC1, MMSC1', MMSC2, MMSC3, MMSCn), umfassend:
Austausch von MMS-Muktimediameldungen zwischen einer lokalen MMS-Multimediadienstzentrale (MMSC1, MMSC1', MMSC2, MMSC3, MMSCn) eines Mobilfunknetzes und einem computerbasierten Meldungstransferagenten (MTA1, MTA1', MTA3) gemäss einem Multimediameldungsprotokoll, beispielsweise das MM4-Protokoll, für den Transfer von MMS-Multimediameldungen zwischen MMS-Multimediadienstzentralen (MMSC1, MMSC1', MMSC2, MMSC3, MMSCn), in welchem Multimediameldungsprotokoll eine MMS-Multimediameldung als Informationselement einer Multimediameldungsanfrage übermittelt wird,
Austausch von Informationselementen, einschliesslich MMS-Multimediameldungen, zwischen dem computerbasierten Meldungstransferagenten (MTA1, MTA1', MTA3) und einer entfernten MMS-Multimediadienstzentrale (MMSC1, MMSC1', MMSC2, MMSC3,MMSCn) eines Mobilfunknetzes mittels elektronischer Nachrichten gemäss einem E-Mail-Nachrichtentransferprotokoll,
Sperren von MMS-Multimediameldungen im computerbasierten Meldungstransferagenten (MTA1, MTA1', MTA3) basierend auf Adressinformationen, die den MMS-Multimediameldungen jeweils zugeordnet sind,
Generieren im computerbasierten Meldungstransferagenten (MTA1, MTA1', MTA3) einer negativen Multimediameldungsantwort gemäss dem Multimediameldungsprotokoll zur Übermittlung an die lokale MMS-Multimediadienstzentrale (MMSC1, MMSC1', MMSC2, MMSC3, MMSCn) jeweils anlässlich einer gesperrten MMS-Multimediameldung, die vorgängig als Informationselement einer Multimediameldungsanfrage von der lokalen MMS-Multimediadienstzentrale (MMSC1, MMSC1', MMSC2, MMSC3, MMSCn) empfangen wurde,
Übermittlung der generierten negativen Multimediameldungsantwort vom computerbasierten Meldungstransferagenten (MTA1, MTA1', MTA3) an die lokale MMS-Multimediadienstzentrale (MMSC1, MMSC1', MMSC2, MMSC3, MMSCn) mittels einer elektronischen Nachricht gemäss dem E-Mail-Nachrichtentransferprotokoll,
Generieren im computerbasierten Meldungsfiransferagenten (MTA1, MTA1', MTA3) einer Fehlernachricht gemäss dem E-Mail-Nachrichtentransferprotokoll jeweils für eine gesperrte MMS-Multimediameldung, für die im computerbasierten Meldungstransferagenten (MTA1, MTA1', MTA3) eine elektronische Nachricht von der entfernten MMS-Multimediadienstzentrale (MMSC1, MMSC1', MMSC2, MMSC3, MMSCn) gemäss dem E-Mail-Nachrichtentransferprotokoll empfangen wurde, und
Übermittlung der generierten Fehlernachricht vom computerbasierten Meldungstransferagenten (MTA1, MTA1', MTA3) an die entfernte MMS-Multimediadienstzentrale (MMSC1, MMSC1', MMSC2, MMSC3, MMSCn) mittels einer elektronischen Nachricht gemäss dem E-Mail-Nachrichtentransferprotokoll.

2. Verfahren nach Anspruch 1, **dadurch gekennzeichnet, dass** vom computerbasierten Meldungstransferagenten (MTA1, MTA1', MTA3) beim Empfang einer genannten Fehlernachricht eine negative Multimediameldungsantwort gemäss dem Multimediameldungsprotokoll generiert wird, und dass die generierte letztgenannte negative Multimediameldungsantwort vom computerbasierten Meldungstransferagenten (MTA1, MTA1', MTA3) an die lokale MMS-Multimediadienstzentrale (MMSC1, MMSC1', MMSC2, MMSC3, MMSCn) übermittelt wird.

3. Verfahren nach einem der Ansprüche 1 oder 2, **dadurch gekennzeichnet, dass** das MM4-Protokoll als Multimediameldungsprotokoll verwendet wird, dass Multimediameldungsanfragen verwendet werden, die einer MM4_forward.REQ-Anfrage entsprechen, dass das SMTP-Protokoll als E-Mail-Nachrichtentransferprotokoll verwendet wird, und dass Multimediameldungsantworten verwendet werden, die einer MM4_forward.RES-Antwort entsprechen.

4. Computerbasierter Meldungstransferagent (MTA1, MTA1', MTA3) für den Transfer von MMS-Multimediameldungen zwischen MMS-Multimediadienstzentralen (MMSC1, MMSC1', MMSC2, MMSC3, MMSCn), umfassend:
ein Multimediakommunikationsmodul (MM4) zum Austauschen von MMS-Multimediameldungen mit einer lokalen MMS-Multimediadienstzentrale (MMSC1, MMSC1', MMSC2, MMSC3, MMSCn) eines Mobilfunknetzes gemäss einem Multimediameldungsprotokoll, beispielsweise das MM4-Protokoll, für den Transfer von MMS-Multimediameldungen zwischen MMS-Multimediadienstzentralen (MMSC1, MMSC1', MMSC2, MMSC3, MMSCn) in welchem Multimediameldungsprotokoll eine MMS-Multimediameldung als Informationselement einer Multimediameldungsanfrage übermittelt wird,
ein Nachrichtenkommunikationsmodul (SMTP) zum Austauschen von Informationselementen, einschliesslich MMS-Multimediameldungen, mit einer entfernten MMS-Multimediadienstzentrale (MMSC1, MMSC1', MMSC2, MMSC3, MMSCn) eines Mobilfunknetzes mittels elektronischer Nachrichten gemäss einem E-Mail-Nachrichtentransferprotokoli,
ein Sperrmodul (4) zum Sperren von MMS-Multimediameldungen basierend auf Adressinformationen, die den MMS-Multimediameldungen jeweils zugeordnet sind, und
ein Antwortmodul (5) zum Generieren einer negativen Multimediameldungsantwort gemäss dem Multimediameldungsprotokoll zur Übermittlung an die lokale MMS-Multimediadienstzentrale (MMSC1, MMSC1', MMSC12, MMSC3, MMSCn) jeweils anlässlich einer gesperrten MMS-Multimediameldung, die vorgängig als Informationselement einer Multimediameldungsanfrage von der lokalen MMS-Multimediadienstzentrale (MMSC1, MMSC1', MMSC2, MMSC3, MMSCn) empfangen wurde, und zum Generieren einer Fehlernachricht gemäss dem E-Mail-Nachrichtentransferprotokoll an die entfernte MMS-Multimediadienstzentrale (MMSC1, MMSC1', MMSC2, MMSC3, MMSCn) jeweils anlässlich einer gesperrten MMS-Multimediameldung, für die im computerbasierten Meldungstransferagenten (MTA1, MTA1', MTA3) eine elektronische Nachricht gemäss dem E-Mail-Nachrichtentransferprotokoll von der entfernten MMS-Multimediadienstzentrale (MMSC1, MMSC1', MMSC2, MMSC3, MMSCn) empfangen wurde.

5. Meldungstransferagent (MTA1, MTA1', MTA3) nach Anspruch 4, **dadurch gekennzeichnet, dass** das Antwortmodul (5) eingerichtet ist zum Generieren einer negativen Multimediameldungsantwort gemäss dem Multimediameldungsprotokoll an die lokale MMS-Multimediadienstzentrale (MMSC1, MMSC1', MMSC2, MMSC3, MMSCn) beim Empfang einer genannten Fehlernachricht.

6. Meldungstransferagent (MTA1, MTA1', MTA3) nach einem der Ansprüche 4 oder 5, **dadurch gekennzeichnet, dass** das Multimediameldungsprotokoll das MM4-Protokoll ist, dass die Multimediameldungsanfrage einer MM4_forward.REQ-Anfrage entspricht, dass das E-Mail-Nachrichtentransferprotokoll das SMTP-Protokoll ist, und dass die Multimediameldungsantwort einer MM4_forward.RES-Antwort entspricht.

7. Computerprogrammprodukt umfassend: ein computerlesbares Medium mit darin enthaltenen Computerprogrammcodemitteln zur Steuerung eines oder mehrerer Prozessoren eines Computers, der mittels eines Multimediakommunikationsmoduls (MM4) mit einer lokalen MMS-Multimediadienstzentrale (MMSC1, MMSC1', MMSC2, MMSC3, MMSCn) eines Mobilfunknetzes verbindbar ist und der mittels eines Nachrichtenkommunikationsmoduls (SMTP) mit einer entfernten MMS-Multimediadienstzentrale (MMSC1, MMSC1', MMSC2, MMSC3, MMSCn) eines Mobilfunknetzes verbindbar ist, derart,
dass der Computer mittels des Multimediakommunikationsmoduls (MM4) MMS-Multimediameldungen mit der lokalen MMS-Multimediadienstzentrale (MMSC1, MMSC1', MMSC2, MMSC3, MMSCn) austauscht, gemäss einem Multimediameldungsprotokoll, beispielsweise das MM4-Protokoll, für den Transfer von MMS-Multimediameldungen zwischen MMS-Multimediadienstzentralen (MMSC1, MMSC1', MMSC2, MMSC3, MMSCn), in welchem Multimediameldungsprotokol eine MMS-Multimediameldung als Informationselement einer Multimediameldungsanfrage übermittelt wird,
dass der Computer mittels des Nachrichtenkommunikationsmoduls (SMTP) gemäss einem E-Mail-Nachrichtentransferprotokoll Informationselemente, einschliesslich MMS-Multimediameldungen, mittels elektronischer Nachrichten mit der entfernten MMS-Multimediadienstzentrale (MMSC1, MMSC1', MMSC2, MMSC3, MMSCn) austauscht,
dass MMS-Multimediameldungen im Computer basierend auf Adressinformationen, die den MMS-Multimediameldungen jeweils zugeordnet sind, gesperrt werden,
dass im Computer anlässlich gesperrter MMS-Multimediameldungen, die vorgängig jeweils als Informationselement einer Multimediameldungsanfrage von der lokalen MMS-Multimediadienstzentrale (MMSC1, MMSC1', MMSC2, MMSC3, MMSCn) empfangen wurden, jeweils eine negative Multimediameldungsantwort gemäss dem Multimediameldungsprotokol! zur Übermittlung an die lokale MMS-Multimediadienstzentrale (MMSC1, MMSC1', MMSC2, MMSC3, MMSCn) generiert wird,
dass die generierte negative Multimediameldungsantwort vorn Computer an die lokale MMS-Multimediadienstzentrale (MMSC1, MMSC1', MMSC2, MMSC3, MMSCn) übermittelt wird,
dass der Computer für gesperrte MMS-Multimediameldungen, für die im Computer jeweils eine elektronische Nachricht gemäss dem E-Mail-Nachrichtentransferprotokoll von der entfernten MMS-Multimediadienstzentrale (MMSC1, MMSC1', MMSC2, MMSC3, MMSCn) empfangen wurde, jeweils eine Fehlernachricht gemäss dem Nachrichtentransferprotokoll generiert, und
dass der Computer die generierte Fehlernachricht mittels einer elektronischen Nachricht gemäss dem E-Mail-Nachrichtentransferprotokoll an die entfernte MMS-Multimediadienstzentrale (MMSC1, MMSC1', MMSC2, MMSC3, MMSCn) übermittelt.

8. Computerprogrammprodukt gemäss Anspruch 7, **dadurch gekennzeichnet, dass** es weitere Computerprogrammcodemittel umfasst, die den oder die Prozessoren des Computers derart steuern, der Computer beim Empfang einer genannten Fehlemachricht eine negative Multimediameldungsantwort gemäss dem Multimediameldungsprotokoll generiert, und dass der Computer die generierte letztgenannte negative Multimediameldungsantwort an die lokale MMS-Multimediadienstzentrale (MMSCn1, MMSC1 MMSC2, MMSC3, MMSCn) übermittelt.

9. Computerprogrammprodukt nach einem der Ansprüche 7 oder 8, **dadurch gekennzeichnet, dass** es weitere Computerprogrammcodemittel umfasst, die den oder die Prozessoren des Computers derart steuern, dass der Computer das MM4-Protokoll als Multimediameldungsprotokoll verwendet, dass der Computer Multimediameldungsanfragen verwendet, die einer MM4_forward.REQ-Anfrage entsprechen, dass der Computer das SMTP-Protokoll als E-Mail-Nachrichtentransferprotokoll verwendet, und dass der Computer Multimediameldungsantworten verwendet, die einer MM4_forward.RES-Antwort entsprechen.

## Claims

1. A method for the transfer of MMS multimedia messages between MMS multimedia service centres (MMSC1, MMSC1', MMSC2, MMSC3, MMSCn), comprising:
exchange of MMS multimedia messages between a local MMS multimedia service centre (MMSC1, MMSC1', MMSC2, MMSC3, MMSCn) of a mobile radio network and a computer-based message transfer agent (MTA1, MTA1',MTA3) in accordance with a multimedia message protocol, for example the MM4 protocol, for the transfer of MMS multimedia messages between MMS multimedia service centres (MMSC1, MMSC1', MMSC2, MMSC3, MMSCn), in which multimedia message protocol a multimedia message is transmitted as an information element of a multimedia message inquiry,
exchange of information elements, including MMS multimedia messages between the computer-based message transfer agent (MTA1, MTA1',MTA3) and a remote MMS multimedia service centre (MMSC1, MMSC1', MMSC2, MMSC3, MMSCn) of a mobile radio network by means of electronic messages in accordance with an email message transfer protocol,
blocking MMS multimedia messages in the computer-based message transfer agent (MTA1, MTA1', MTA3) based on address information which is respectively assigned to the MMS multimedia messages,
generating in the computer-based message transfer agent (MTA1, MTA1', MTA3) a negative multimedia message answer in accordance with the multimedia message protocol for transmission to the local MMS multimedia service centre (MMSC1, MMSC1', MMSC2, MMSC3, MMSCn) in each case in the event of a blocked MMS multimedia message, which has been received provisionally as an information element of a multimedia message inquiry from the local MMS multimedia service centre (MMSC1, MMSC1', MMSC2, MMSC3, MMSCn),
transmitting the generated negative multimedia message answer from the computer-based message transfer agent (MTA1, MTA1',MTA3) to the local MMS multimedia service centre (MMSC1, MMSC1', MMSC2, MMSC3, MMSCn) by means of an electronic message in accordance with the email message transfer protocol,
generating in the computer-based message transfer agent (MTA1, MTA1', MTA3) an error message in accordance with the email message transfer protocol respectively for a blocked MMS multimedia message, which in the computer-based message transfer agent (MTA1, MTA1',MTA3) an electronic message has been received from the remote MMS multimedia service centre (MMSC1, MMSC1', MMSC2, MMSC3, MMSCn) in accordance with the email message transfer protocol, and
transmitting the generated error message from the computer-based message transfer agent (MTA1, MTA1', MTA3) to the remote MMS multimedia service centre (MMSC1, MMSC1', MMSC2, MMSC3, MMSCn) by means of an electronic message in accordance with the email message transfer protocol.

2. A method according to Claim 1, **characterised in that** a negative multimedia message answer in accordance with the email message protocol is generated by the computer-based message transfer agent (MTA1, MTA1', MTA3) upon receiving a said error message, and **in that** said generated negative multimedia message answer is transmitted from the computer-based message transfer agent (MTA1, MTA1', MTA3) to the local MMS multimedia service centre (MMSC1, MMSC1', MMSC2, MMSC3, MMSCn).

3. A method according to either Claim 1 or Claim 2, **characterised in that** the MM4 protocol is used as the multimedia message protocol, **in that** multimedia message inquiries are used which correspond to an MM4_forward.REQ inquiry, **in that** the SMTP protocol is used as email message transfer protocol, and **in that** multimedia message answers are used which correspond to an MM4_forward.RES answer.

4. A computer-based message transfer agent (MTA1, MTA1', MTA3) for the transfer of MMS multimedia messages between MMS multimedia service centres (MMSC1, MMSC1', MMSC2, MMSC3, MMSCn), comprising:
a multimedia communications module (MM4) for the exchange of MMS multimedia messages with a local MMS multimedia service centre (MMSC1, MMSC1', MMSC2, MMSC3, MMSCn) of a mobile radio network in accordance with a multimedia message protocol, for example the MM4 protocol, for the transfer of MMS multimedia messages between MMS multimedia service centres (MMSC1, MMSC1', MMSC2, MMSC3, MMSCn), in which multimedia message protocol an MMS multimedia message is transmitted as an information element of a multimedia message inquiry,
a message communications module (SMTP) for the exchange of information elements, including MMS multimedia messages, with a remote MMS multimedia service centre (MMSC1, MMSC1', MMSC2, MMSC3, MMSCn) of a mobile radio network by means of electronic messages in accordance with an email message transfer protocol,
a blocking module (4) for the blocking of MMS multimedia messages based on address information which is respectively assigned to the MMS multimedia messages,
an answer module (5) for generating a negative multimedia message answer in accordance with the multimedia message protocol for transmission to the local MMS multimedia service centre (MMSC1, MMSC1', MMSC2, MMSC3, MMSCn) in each case in the event of a blocked MMS multimedia message, which has been received provisionally as an information element of a multimedia message inquiry from the local MMS multimedia service centre (MMSC1, MMSC1', MMSC2, MMSC3, MMSCn), and for generating an error message in accordance with the email message transfer protocol at the remote MMS multimedia service centre (MMSC1, MMSC1', MMSC2, MMSC3, MMSCn) in each case in the event of a blocked MMS multimedia message, for which in the computer-based message transfer agent (MTA1, MTA1', MTA3) an electronic message has been received from the remote MMS multimedia service centre (MMSC1, MMSC1', MMSC2, MMSC3, MMSCn) in accordance with the email message transfer protocol.

5. A message transfer agent (MTA1, MTA1', MTA3) according to Claim 4, **characterised in that** the answer module (5) is set up to generate a negative multimedia message answer in accordance with the multimedia message protocol at the local MMS multimedia service centre (MMSC1, MMSC1', MMSC2, MMSC3, MMSCn) upon receiving a said error message.

6. A message transfer agent (MTA1, MTA1', MTA3) according to either Claim 4 or Claim 5, **characterised in that** the multimedia message protocol is the MM4 protocol, **in that** the multimedia message inquiry corresponds to an MM4_forward.REQ inquiry, **in that** the email message transfer protocol is the SMTP protocol, and **in that** multimedia message answer corresponds to an MM4_forward.RES answer.

7. A computer program product comprising: a computer-readable medium with computer program code means contained therein for controlling one or more processors of a computer which can be connected by means of a multimedia communications module (MM4) to a local MMS multimedia service centre (MMSC1, MMSC1', MMSC2, MMSC3, MMSCn) of a mobile radio network and which can be connected by means of a message communications module (SMTP) to a remote MMS multimedia service centre (MMSC1, MMSC1', MMSC2, MMSC3, MMSCn) of a mobile radio network, in such a way
that by means of the multimedia communications module (MM4) the computer exchanges MMS multimedia messages with the local MMS multimedia service centre (MMSC1, MMSC1', MMSC2, MMSC3, MMSCn) in accordance with an MMS multimedia message protocol, for example the MM4 protocol, for the transfer of MMS multimedia messages between MMS multimedia service centres (MMSC1, MMSC1', MMSC2, MMSC3, MMSCn), in which MMS multimedia message protocol an MMS multimedia message is transmitted as an information element to a multimedia message inquiry,
that the computer, by means of the message communications module (STMP) in accordance with the email message transfer protocol, exchanges information elements, including MMS multimedia messages, by means of electronic messages with the remote MMS multimedia service centres (MMSC1, MMSC1', MMSC2, MMSC3, MMSCn),
that MMS multimedia messages are blocked in the computer based on address information which is respectively assigned to the MMS multimedia messages,
that in the computer, in the event of blocked MMS multimedia messages which have been received provisionally as a respective information element of a multimedia message inquiry from the local MMS multimedia service centre (MMSC1, MMSC1', MMSC2, MMSC3, MMSCn), in each case a negative multimedia message answer is generated in accordance with the multimedia message protocol for transmission to the local MMS multimedia service centre (MMSC1, MMSC1', MMSC2, MMSC3, MMSCn),
that the generated negative multimedia message answer is transmitted by the computer to the local MMS multimedia service centre (MMSC1, MMSC1', MMSC2, MMSC3, MMSCn),
that for blocked MMS multimedia messages, for which in the computer a respective electronic message in accordance with the email message transfer protocol was received from the remote MSS multimedia service centre (MMSC1, MMSC1', MMSC2, MMSC3, MMSCn), the computer generates a respective error message in accordance with the message transfer protocol, and
that the computer transmits the generated error message by means of an electronic message in accordance with the email message transfer protocol to the remote MSS multimedia service centre (MMSC1, MMSC1', MMSC2, MMSC3, MMSCn).

8. A computer program product according to Claim 7, **characterised in** it comprises further computer program code means which control the computer processor or processors in such a way that upon receiving a said error message the computer generates a negative multimedia message answer in accordance with the multimedia message protocol, and **in that** the computer transmits said generated negative multimedia message answer to the local MSS multimedia service centre (MMSC1, MMSC1', MMSC2, MMSC3, MMSCn).

9. A computer program product according to either Claim 7 or Claim 8, **characterised in** it comprises further computer program code means which control the computer processor or processors in such a way that the computer uses the MM4 protocol as the multimedia message protocol, **in that** the computer uses multimedia message inquiries which correspond to an MM4_forward.REQ inquiry, **in that** the computer uses the SMTP protocol as email message transfer protocol, and **in that** the computer uses multimedia message answers which correspond to an MM4_forward.RES answer.

## Revendications

1. Procédé de transfert de messages multimédia MMS entre des centrales de services multimédia MMS (MMSC1, MMSC1', MMSC2, MMSC3, MMSCn), comprenant :
l'échange de messages multimédia MMS entre une centrale de services multimédia MMS locale (MMSC1, MMSC1', MMSC2, MMSC3, MMSCn) d'un réseau radio mobile et un agent de transfert de messages basé sur informatique (MTA1, MTA1', MTA3) conformément à un protocole de messages multimédia, par exemple le protocole MM4, pour le transfert de messages multimédia MMS entre des centrales de services multimédia MMS (MMSC1, MMSC1', MMSC2, MMSC3, MMSCn), protocole de messages multimédia dans lequel un message multimédia MMS est transmis en tant qu'élément d'information d'une requête de message multimédia,
l'échange d'éléments d'information, y compris des messages multimédia MMS, entre l'agent de transfert de messages basé sur informatique (MTA1, MTA1', MTA3) et une centrale de services multimédia MMS éloignée (MMSC1, MMSC1', MMSC2, MMSC3, MMSCn) d'un réseau radio mobile au moyen de messages électroniques conformément à un protocole de transfert de messages e-mail,
le blocage de messages multimédia MMS dans l'agent de transfert de messages basé sur informatique (MTA1, MTA1', MTA3) en fonction d'informations d'adresse respectivement associées aux messages multimédia MMS,
la génération, dans l'agent de transfert de messages basé sur informatique (MTA1, MTA1', MTA3), d'une réponse de message multimédia négative conformément au protocole de messages multimédia destinée à être transmise à la centrale de services multimédia MMS locale (MMSC1, MMSC1', MMSC2, MMSC3, MMSCn) respectivement à l'occasion d'un message multimédia MMS bloqué qui a été reçu préalablement en tant qu'élément d'information d'une requête de message multimédia par la centrale de services multimédia MMS locale (MMSC1, MMSC1', MMSC2, MMSC3, MMSCn),
la transmission de la réponse de message multimédia négative générée de l'agent de transfert de messages basé sur informatique (MTA1, MTA1', MTA3) à la centrale de services multimédia MMS locale (MMSC1, MMSC1', MMSC2, MMSC3, MMSCn) au moyen d'un message électronique conformément au protocole de transfert de messages e-mail,
la génération, dans l'agent de transfert de messages basé sur informatique (MTA1, MTA1', MTA3), d'un message d'erreur conformément au protocole de transfert de messages e-mail respectivement pour un message multimédia MMS bloqué pour lequel, dans l'agent de transfert de messages basé sur informatique (MTA1, MTA1', MTA3), un message électronique a été reçu par la centrale de services multimédia MMS éloignée (MMSC1, MMSC1', MMSC2, MMSC3, MMSCn) conformément au protocole de transfert de messages e-mail, et
la transmission du message d'erreur généré de l'agent de transfert de messages basé sur informatique (MTA1, MTA1', MTA3) à la centrale de services multimédia MMS éloignée (MMSC1, MMSC1', MMSC2, MMSC3, MMSCn) au moyen d'un message électronique conformément au protocole de transfert de messages e-mail.

2. Procédé selon la revendication 1, **caractérisé en ce que** l'agent de transfert de messages basé sur informatique (MTA1, MTA1', MTA3), lors de la réception d'un message d'erreur donné, génère une réponse de message multimédia négative conformément au protocole de messages multimédia, et la réponse de message multimédia négative précitée générée est transmise par l'agent de transfert de messages basé sur informatique (MTA1, MTA1', MTA3) à la centrale de services multimédia MMS locale (MMSC1, MMSC1', MMSC2, MMSC3, MMSCn).

3. Procédé selon l'une des revendications 1 ou 2, **caractérisé en ce que** le protocole MM4 est utilisé en tant que protocole de messages multimédia, on utilise des requêtes de message multimédia qui correspondent à une requête MM4_forward.REQ, le protocole SMTP est utilisé en tant que protocole de transfert de messages e-mail, et on utilise des réponses de message multimédia qui correspondent à une réponse MM4_forward.RES.

4. Agent de transfert de messages basé sur informatique (MTA1, MTA1', MTA3) pour le transfert de messages multimédia MMS entre des centrales multimédia MMS (MMSC1, MMSC1', MMSC2, MMSC3, MMSCn), comprenant :
un module de communication multimédia (MM4) pour échanger des messages multimédia MMS avec une centrale de services multimédia locale (MMSC1, MMSC1', MMSC2, MMSC3, MMSCn) d'un réseau radio mobile conformément à un protocole de messages multimédia, par exemple le protocole MM4, pour le transfert de messages multimédia MMS entre des centrales de services multimédia MMS (MMSC1, MMSC1', MMSC2, MMSC3, MMSCn), protocole de messages multimédia dans lequel un message multimédia MMS est transmis en tant qu'élément d'information d'une requête de message multimédia,
un module de communication de messages (SMTP) pour échanger des éléments d'information, y compris des messages multimédia MMS, avec une centrale de services multimédia MMS éloignée (MMSC1, MMSC1', MMSC2, MMSC3, MMSCn) d'un réseau radio mobile au moyen de messages électroniques conformément à un protocole de transfert de messages e-mail,
un module de blocage (4) pour bloquer des messages multimédia MMS en fonction d'informations d'adresse respectivement associées aux messages multimédia MMS, et
un module de réponse (5) pour générer une réponse de message multimédia négative conformément au protocole de messages multimédia destinée à être transmise à la centrale de services multimédia MMS locale (MMSC1, MMSC1', MMSC2, MMSC3, MMSCn) respectivement à l'occasion d'un message multimédia MMS bloqué qui a été reçu préalablement en tant qu'élément d'information d'une requête de message multimédia par la centrale de services multimédia MMS locale (MMSC1, MMSC1', MMSC2, MMSC3, MMSCn), et pour générer un message d'erreur conformément au protocole de transfert de messages e-mail à la centrale de services multimédia MMS éloignée (MMSC1, MMSC1', MMSC2, MMSC3, MMSCn) respectivement à l'occasion d'un message multimédia MMS bloqué pour lequel, dans l'agent de transfert de messages basé sur informatique (MTA1, MTA1', MTA3), un message électronique a été reçu par la centrale de services multimédia MMS éloignée (MMSC1, MMSC1', MMSC2, MMSC3, MMSCn) conformément au protocole de transfert de messages e-mail.

5. Agent de transfert de messages (MTA1, MTA1', MTA3) selon la revendication 4, **caractérisé en ce que** le module de réponse (5) est conçu pour générer une réponse de message multimédia négative conformément au protocole de messages multimédia à la centrale de services multimédia MMS locale (MMSC1, MMSC1', MMSC2, MMSC3, MMSCn) lors de la réception d'un message d'erreur donné.

6. Agent de transfert de messages (MTA1, MTA1', MTA3) selon l'une des revendications 4 ou 5, **caractérisé en ce que** le protocole de messages multimédia est le protocole MM4, la requête de message multimédia correspond à une requête MM4_forward.REQ, le protocole de transfert de messages e-mail est le protocole SMTP, et la réponse de message multimédia correspond à une réponse MM4_forward.RES.

7. Produit de programme informatique comprenant : un moyen informatisable contenant des moyens de code de programme informatique pour commander un ou plusieurs processeurs d'un ordinateur, pouvant être relié au moyen d'un module de communication multimédia (MM4) à une centrale de services multimédia MMS locale (MMSC1, MMSC1', MMSC2, MMSC3, MMSCn) d'un réseau radio mobile et pouvant être relié au moyen d'un module de communication de messages (SMTP) à une centrale de services multimédia MMS éloignée (MMSC1, MMSC1', MMSC2, MMSC3, MMSCn) d'un réseau radio mobile, de telle sorte que
l'ordinateur échange, au moyen du module de communication multimédia (MM4), des messages multimédia MMS avec la centrale de services multimédia MMS locale (MMSC1, MMSC1', MMSC2, MMSC3, MMSCn), conformément à un protocole de messages multimédia, par exemple le protocole MM4, pour le transfert de messages multimédia MMS entre des centrales de services multimédia MMS (MMSC1, MMSC1', MMSC2, MMSC3, MMSCn), protocole de messages multimédia dans lequel un message multimédia MMS est transmis en tant qu'élément d'information d'une requête de message multimédia,
l'ordinateur, au moyen du module de communication de messages (SMTP), conformément à un protocole de transfert de messages e-mail, échange des éléments d'information, y compris des messages multimédia MMS, au moyen de messages électroniques, avec la centrale de services multimédia MMS éloignée (MMSC1, MMSC1', MMSC2, MMSC3, MMSCn),
les messages multimédia MMS sont bloqués dans l'ordinateur en fonction d'informations d'adresse respectivement associées aux messages multimédia MMS,
dans l'ordinateur, à l'occasion de messages multimédia MMS bloqués, qui ont été préalablement reçus respectivement en tant qu'élément d'information d'une requête de message multimédia par la centrale de services multimédia MMS locale (MMSC1, MMSC1', MMSC2, MMSC3, MMSCn), on génère respectivement une réponse de message multimédia négative conformément au protocole de messages multimédia destinée à être transmise à la centrale de services multimédia MMS locale (MMSC1, MMSC1', MMSC2, MMSC3, MMSCn),
la réponse de message multimédia négative générée est transmise par l'ordinateur à la centrale de services multimédia MMS locale (MMSC1, MMSC1', MMSC2, MMSC3, MMSCn),
l'ordinateur, pour des messages multimédia MMS bloqués, pour lesquels dans l'ordinateur, respectivement un message électronique a été reçu par la centrale de services multimédia MMS locale (MMSC1, MMSC1', MMSC2, MMSC3, MMSCn) conformément au protocole de transfert de messages e-mail, génère respectivement un message d'erreur conformément au protocole de transfert de messages, et
l'ordinateur transmet le message d'erreur généré au moyen d'un message électronique conformément au protocole de transfert de messages e-mail à la centrale de services multimédia MMS éloignée (MMSC1, MMSC1', MMSC2, MMSC3, MMSCn).

8. Produit de programme informatique selon la revendication 7, **caractérisé en ce qu'**il comprend d'autres moyens de code de programme informatique qui commandent le ou les processeurs de l'ordinateur de telle sorte que l'ordinateur, lors de la réception d'un message d'erreur donné, génère une réponse de message multimédia négative conformément au protocole de messages multimédia, et l'ordinateur transmet la réponse de message multimédia négative précitée générée à la centrale de services multimédia MMS locale (MMSC1, MMSC1', MMSC2, MMSC3, MMSCn).

9. Produit de programme informatique selon l'une des revendications 7 ou 8, **caractérisé en ce qu'**il comprend d'autres moyens de code de programme informatique, qui commandent le ou les processeurs de l'ordinateur de telle sorte que l'ordinateur utilise le protocole MM4 en tant que protocole de messages multimédia, l'ordinateur utilise des requêtes de message multimédia qui correspondent à une requête MM4_forward.REQ, l'ordinateur utilise le protocole SMTP en tant que protocole de transfert de messages e-mail, et l'ordinateur utilise des réponses de message multimédia qui correspondent à une réponse MM4_forward.RES.
